# EUROPEAN PATENT APPLICATION

(11) **EP 2 757 799 A1**
(43) Date of publication of application: **23.07.2014**
(21) Application number: 13194663.4
(22) Date of filing: 27.11.2013
(51) Int. Cl.: H04N 21/466, H04N 21/442

(54) **Display apparatus and method for providing customer-built information using the same**

(30) Priority: 21.01.2013 KR 20130006392
(71) Applicant: Samsung Electronics Co., Ltd, Gyeonggi-do 443-742 (KR)
(72) Inventor: Kim, Jung-hoon, Busan (KR); Kim, Sung-soo, Seoul (KR); Choi, Jong-il, Seoul (KR)
(74) Representative: Hewett, Jonathan Michael Richard

(57) **Abstract**

A display apparatus and a method performed by the display apparatus are capable of collecting and analyzing a conversational service log to recommend suitable content to a user. The display apparatus includes: a communication portion which communicates with an external device using a predetermined protocol, a user interface (UI) to receive a request signal from a user, a display, a sensor to collect log information and a tendency profile, and a controller to control the operations of the display apparatus including transmitting the data collected through the sensor to an external device, receiving a media recommendation request signal through the UI and transmitting the media recommendation request signal to the external device, receiving recommendation information from the external device, and displaying the received recommendation information.

## Description

The present invention relates to a display apparatus and a method for providing a personalized service for a user using the same, and more particularly, to a display apparatus and a method for providing customer-built information using the same which collects and analyzes user's log information and provides recommendation information according to the characteristic of the information or other discretionary information.

Technology for providing a personalized service which is based on various information applies to various fields. An example of such technology includes a content recommendation system based on a purchase pattern of a user. In addition, there are many recommendation technologies such as a technology for recommending content by learning behavior specifications of a content item user, a technology for recommending a media list depending on TV viewers, a technology for recommending content based on territorial information and a content usage log of a user, and a technology for recommending content based on social network service (SNS) and profile filtering.

However, such conventional recommendation technologies provide recommendation service based on passive information or fragmentary information only. Accordingly, the technologies have limited effect and do not have any information model such as a tendency model for a user which can be utilized for personalized service.

Additional aspects and/or advantages of the present invention will be set forth in part in the description which follows and, in part, will be apparent from the description, or may be learned by practice of the invention.

Accordingly, one or more exemplary embodiments provide a display apparatus and a method for providing customer-built information using the same which is capable of collecting and analyzing a conversational service log (big data) to recommend suitable content.

Another exemplary embodiment provides a display apparatus and a method for providing customer-built information using the same which is capable of providing metadata for a personalized recommendation service based on an analyzed user tendency.

The foregoing and/or other aspects may be achieved by providing a display apparatus including: a communication portion which communicates with a plurality of external devices using a predetermined protocol; a user interface (UI) which is used to receive a request signal from a user; a display; a sensor which includes a plurality of sensing portions to collect log information and a tendency profile based on the user's behavior information, content playing environment information, broadcasting information, and content information when a content received through the communication portion is displayed on the display; and a controller which outputs a control signal to perform an operation for transmitting the data collected through the sensor to any of the plurality of external devices through the communication portion, an operation of receiving a media recommendation request signal through the UI and transmitting the media recommendation request signal to the external device through the communication portion, an operation of receiving recommendation information from the external device according to the data analysis result, and an operation of displaying the received recommendation information through the display.

According to an aspect of another exemplary embodiment, the tendency profile includes a default tendency profile that is provided as a default, and a user tendency profile that is defined by a user.

According to an aspect of another exemplary embodiment, the default tendency profile includes at least one of a user's tendency model profile, sociality profile, and consumption profile.

According to an aspect of another exemplary embodiment, the recommendation information includes a multimedia content list, and the order of recommended multimedia contents are provided by taking into account at least one of a user's tendency, popularity, territory, time and season.

The foregoing and/or other aspects of the present invention may be achieved by providing a method for providing customer-built information using a display apparatus, the method including: collecting data needed for analysis of a user's tendency; transmitting the data to an external device; receiving a media recommendation request signal from a user; transmitting the media recommendation request signal to the external device; receiving the analyzed media recommendation information from the external device; and displaying the received media recommendation information.

According to an aspect of another exemplary embodiment, the collecting the data needed for analysis of a user's tendency includes displaying a content on the display and extracting user's behavior information, content playing environment information, broadcasting information, and content information to collect a user's log information and tendency profile while the content is displayed on the display.

The foregoing and/or other aspects of the present invention may be achieved by a method of providing customer-built information using a server, the method including: receiving, from a display apparatus, log information and tendency profile data of a user, receiving, from the display apparatus, a content recommendation request, generating a content recommendation based on the log information and tendency profile data of the user and log information and tendency profiles of a plurality of users stored in a database, and transmitting the content recommendation to the display apparatus.

The method may further include storing the log information and tendency profile data of the user in the database. The generating of the content recommendation may further include analyzing the tendency of the user based on the log information and a tendency model profile, and grouping users and content usage based on the analyzed tendency. The server may apply the tendency model to analyze the tendency of the user using at least one of an unsupervised learning method and a supervised learning method.

The foregoing and/or other aspects of the present invention may be achieved by a system to provide customer-built information, the system including: a display apparatus to receive a request from a user to recommend content and to collect log information and a tendency profile based on behavior information of the user, environmental information, broadcasting information, and content information, a database to store log information and tendency profiles of a plurality of users, and a server to receive the collected log information and tendency profile of the user from the display apparatus, to generate a content recommendation for the user based on the log information and tendency profile of the user and the log information and tendency profiles stored in the database.

The server may transmit the generated content recommendation to the display apparatus, and the display apparatus may display the content recommendation through a display using a multimedia content list, and an order of the recommended multimedia contents may be provided based on at least one of a user's tendency, popularity, territory, time and season.

While the display apparatus displays a content, a controller of the display apparatus may extract behavior information of the user, environmental information, broadcasting information, and content information, to collect log information of the user and the tendency profile.

The server may apply a tendency model to analyze a tendency of the user using at least one of an unsupervised learning method and a supervised learning method.

The display apparatus may include a sensor to extract the behavior information of the user, wherein the behavior information may include at least one of a location of the user, number of users, and physical attributes of the user. The environmental information may include at least one of noise information, intensity of illumination, territory, and time. The broadcasting information may include at least one of genre, length, broadcast hour, and airwave or cable information. The content information may include at least one of genre, length, price, release date, and execution time.

The above and/or other aspects will become apparent and more readily appreciated from the following description of the exemplary embodiments, taken in conjunction with the accompanying drawings, in which:
FIG. 1 illustrates an example of a system for providing customer-built information according to an embodiment;
FIG. 2 is a block diagram of a display apparatus which performs a function of providing customer-built information according to an embodiment; and
FIG. 3 is a flowchart showing a method for providing customer-built information using the display apparatus according to an embodiment.

Below, exemplary embodiments will be described in detail with reference to accompanying drawings so as to be easily realized by a person having ordinary knowledge in the art. The present invention may be embodied in various forms without being limited to the exemplary embodiments set forth herein. Descriptions of well-known parts are omitted for clarity, and like reference numerals refer to like elements throughout.

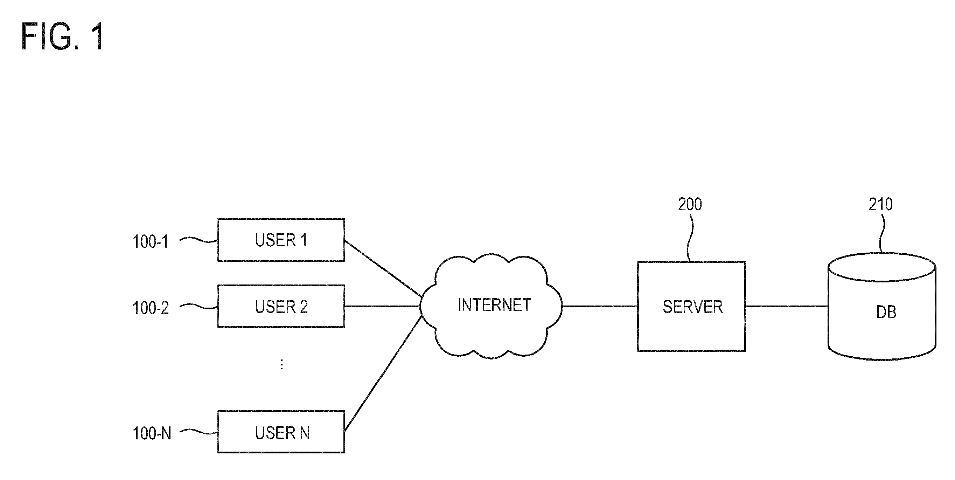

FIG. 1 illustrates an example of a system for providing customer-built information according to an embodiment. As shown therein, display apparatuses 100-1, 100-2... and 100-N of a plurality of users are connected to a server 200 through a network (for example, the Internet). The network may be a wired or wireless network, or a combination thereof. The server 200 is connected to a database 210. To explain the drawings, the display apparatuses of the respective users will be referred to as users 100-1,100-2... and 100-N. The server 200 collects log information and a tendency profile from the plurality of users 100-1,100-2... and 100-N, and stores the information and profile in the database 210. Upon receiving a signal for requesting media recommendation from any user, the server 200 analyzes the data stored in the database 210, generates optimum media recommendation information based on a user tendency and provides the information to the user who has requested it.

As one of ordinary skill in the art would understand, the database 210 may include a collection of data and supporting data structures which may be embodied as, for example, a storage device. For example, the storage may be embodied as a storage medium, such as a nonvolatile memory device, such as a Read Only Memory (ROM), Programmable Read Only Memory (PROM), Erasable Programmable Read Only Memory (EPROM), and flash memory, a USB drive, a volatile memory device such as a Random Access Memory (RAM), a hard disk, floppy disks, a blue-ray disk, or optical media such as CD ROM discs and DVDs, or combinations thereof. However, examples of the storage are not limited to the above description, and the storage may be realized by other various devices and structures as would be understood by those skilled in the art.

That is, the server 200 collects conversational service log information of a user connected through the Internet. Then, the server 200 analyzes the user's tendency based on the collected log information and tendency model profile. Then, users and content usage information are grouped on the basis of the analyzed user's tendency. The server 200 may provide recommendation information based on the received request information (tendency model profile and user information) and grouped information.

Each user may select the tendency model profile to be utilized through his/her display apparatus, and may require (or request) the server 200 to provide media recommendation information which will use the tendency model profile. In this case, a plurality of profiles may be selected.

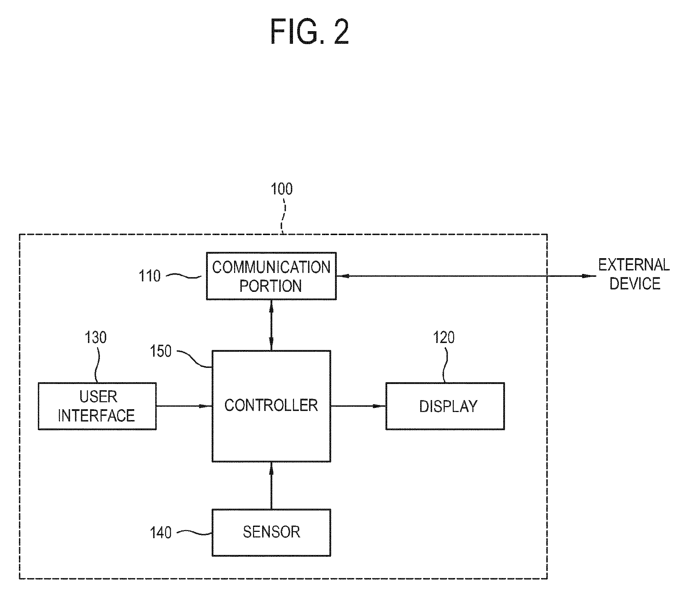

FIG. 2 is a block diagram of a display apparatus which performs a function of providing customer-built information according to an embodiment. The display apparatus 100 according to an embodiment includes a communication portion 110 which communicates with a plurality of external devices using a predetermined protocol, and a display 120, and a user interface (UI) 130 which is used to receive a request signal (input) from a user.

As one of ordinary skill in the art would understand, the communication portion 110 may include a plurality of connectors such as USB 2.0, USB 3.0, HDMI, IEEE 1394, or the like, to be connected to various types of external devices by a wired connection. Alternatively, or in addition to a wired connection, the display apparatus may be connected to various types of external devices via a wireless connection. The wireless connection may be performed using various types of wireless networks, for example via BLUETOOTH or WI-FI, or via a remote control device such as by using an infrared remote control, for example.

As one of ordinary skill in the art would understand, the display 120 may include a liquid crystal display (LCD), a light emitting diode (LED) display, an organic light emitting diode (OLED) display, a plasma display panel (PDP), a cathode ray tube (CRT) display, and the like, for example. However, the disclosure is not so limited and may include other types of displays.

As one of ordinary skill in the art would understand, the user interface 130 may include, for example, one or more of a keyboard, a mouse, a joystick, a button, a switch, an electronic pen or stylus, a body part, an input sound device (e.g., a microphone to receive a voice command), a track ball, a remote controller, a portable (e.g., a cellular or smart) phone, a tablet PC, a pedal or footswitch, a virtual-reality device, and so on. The user interface may further include a haptic device to provide haptic feedback to a user. The user interace may also include a touchscreen, for example.

The display apparatus 100 may further include, for example, a sensor 140 (or collector) which includes a plurality of sensing portions to collect log information and a tendency profile based on a user's behavior information, content playing environment information, broadcasting information, and/or content information when a content transmitted through the communication portion 110 is displayed on the display 120. As one of ordinary skill in the art would understand, the plurality of sensing portions may include various types of sensors in order to collect information about the user as well to collect environmental information, so that a personalized recommendation service may be enhanced. For example, the sensor may include a camera or an imaging sensor (e.g., a complementary metal-oxide-semiconductor (CMOS) or charge-coupled device (CCD)) to detect or recognize a user's behavior, figure, expression, or the number of joint users, etc. The sensors may further include a brightness sensor to detect and recognize brightness information. The sensors may also include an accelerometer, an encoder, a gyroscope, and the like, to detect or recognize the motion of a user or of an input device (e.g., a remote control), to receive a user's command. The sensors may also include one or more sensors to detect or recognize environmental information (for example, a temperature sensor to detect or recognize temperature, a pressure sensor to detect or recognize pressure, a humidity sensor to detect or recognize humidity, etc.). The sensors may further include an audio sensor (e.g., a microphone) to recognize a voice of one or more users. The sensors may further include a navigation sensor (e.g., a GPS or INU) to obtain location information of the display apparatus. The sensors may further include a clock for obtaining time information. The sensors may further include a touch sensor to detect or recognize a touch input. However, the disclosure is not so limited and may include other types of sensors. Broadcasting information and/or content information when content transmitted through the communication portion 110 is displayed on the display 120, may be obtained from an electronic program guide (EPG) for example.

The display apparatus may further include, for example, a controller 150 which outputs a control signal to perform an operation for transmitting the data collected through the sensor 140 to any of the plurality of external devices (e.g., the server in FIG. 1) through the communication portion 110, an operation of receiving a media recommendation request signal through the UI 120 and transmitting the signal to an external device through the communication portion 110, an operation of receiving recommendation information from an external device according to the data analysis result, and an operation of displaying the received recommendation information through the display 120.

The display apparatus and the method for providing the customer-built information using the display apparatus according to an embodiment provides a personalized recommendation service. By way of illustration and example only, the display apparatus according to example embodiments disclosed herein, may be applied to or embodied as, a television, such as a "smart" TV. A smart TV may perform numerous functions, such as the ability to interact with a user's cellular phone, camera, or personal computer, or enable a user to play games, browse the Internet, or access applications over the Internet. For example, in a smart TV which can access the Internet, upon execution of, e.g., a program, a desired music application or service may accessed (e.g., My Concert). The method for providing the customer-built information using the display apparatus may be applied to the music service to reflect the user's taste, and a personalized content service (e.g., music, music video, etc.) may be provided by taking into account and analyzing the user's favorite tendency, latest (or recent) popular tendency, tendency based on season, time and territorial information, and tendency shown by people who are similar to the user. However, the display apparatus according to example embodiments disclosed herein, may generally be applied to or embodied as, any electronic device which is capable of providing (e.g., outputting audio or displaying video or images) content to a user, including but not limited to, televisions, audio devices, video devices, computers, tablets, smart phones, and the like.

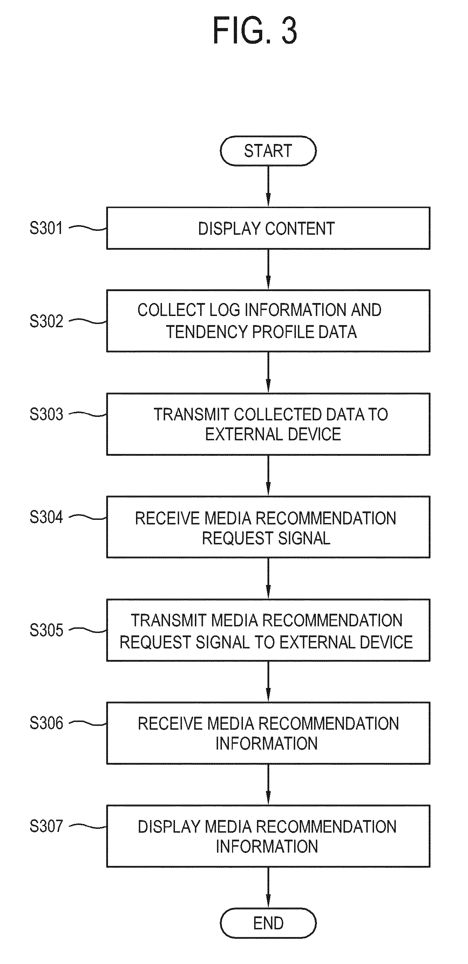

FIG. 3 is a flowchart showing a method for providing customer-built information using the display apparatus according to the embodiment. Each operation will be explained on the basis of the display apparatus as the subject.

According to the user's manipulation, the display apparatus 100 displays content on the display 130. While the content is displayed on the display 130, the controller 150 extracts the user's behavior information, content playing environment information, broadcasting information and content information to collect the user's log information and tendency profile.

The conversational service log that is collected through the foregoing process may be based on the following disclosure, for example.

That is, the sensor 140 may extract the user's behavior information (which may be categorized under category A in the tendency model). For example, the behavior information A may include the user's location which may be detected using a camera or GPS, for example; the number of user(s); the size of a user's head; and motion information based on joint information, which may be detected using a camera, for example.

Further, environmental information (which may be categorized under category B in the tendency model) may be extracted. For example, the extracted environmental information B may include noise, which may be detected using a microphone, for example; intensity of illumination which may be detected using a brightness sensor, for example; territory which may be detected using a navigation device such as a GPS, for example; and time which may be detected using a clock, for example.

The broadcasting information (which may be categorized under category C in the tendency model) which is output through the display apparatus may also be extracted. For example, the extracted broadcasting information C may include genre, length (e.g., duration of the program), broadcast hour, and airwave or cable information. The broadcasting information may be obtained from an electronic program guide (EPG) for example.

Further, content information (which may be categorized under category D in the tendency model) which is output through the display apparatus may be extracted. For example, genre, length (e.g., duration of the program), price, release date, and execution time may be extracted. The content information which is output through the display apparatus may be obtained from an electronic program guide (EPG) for example.

The collection operation, that is the collection of conversational service log information (e.g., a user's behavior, environmental information, broadcasting information, and content information), may be continuously performed until an additional service suspension is set in the case where a user has set the content service and whenever it is logged (S301).

After the collection operation is performed, the controller 150 may transmit the collected data, to the external device, e.g., the server 200, through the communication portion 110. The communication portion 110 may be connected to the server 200 through the Internet. Upon receiving the information of the user and content, the server 200 stores the user log information in the database 210 connected thereto. The server 200 may analyze the user's tendency profile using the foregoing information after a certain time period (e.g., a predetermined time period) goes past (S302).

A user may input a media recommendation request signal using a predetermined menu function. Such a request signal may be transmitted through various UI 130 devices. For example, the request signal may be input through a remote controller or a manipulation button of the display apparatus (S303). As another non-limiting example, the user interface may include a portable (e.g., a cellular or smart) phone or a tablet PC which may be used to send a request signal.

The controller 150 may transmit the media recommendation request signal to the server 200 through the communication portion 110 which may access the Internet (S304).

The server 200 may perform data mining using the information stored in the database 210. Data mining may refer to the extraction of valuable information from large-scale data (sometimes referred to as big data). The server 200 analyzes the conversational service log, groups the users and contents and generates recommendation information based on the foregoing. A tendency model applies to analysis of the tendency of user and content.

The tendency model may be defined as a plurality of T-Profiles, and may be classified into a default tendency profile (DT-Profile) provided as a default, and a user defined tendency profile (UT-Profile) that may be defined by a user.

The DT-Profile includes tendency model, sociality, and consumption profiles, each of which may relate to the following log information as shown in Table 1:

**Table 1**

| DT-PROFILE | | |
|---|---|---|
| 1. Tendency Model | 2. Sociality | 3. Consumption |
| A. User's behavior information | A. User's behavior information | A. User's behavior information |
| B. Noise | B. Territory | B. The number of user(s) |
| C. Broadcasting information (genre) | C. Time | C. Territory |
| D. Content information (genre) | D. Broadcasting information (genre) | D. Broadcasting information (genre) |
| | E. Content information (genre) | E. Content information (genre) |
| | F. Broadcasting hour | F. Airwave/cable |
| | G. Release date | G. Content price |
| | | H. Release date |

The UT-Profile may refer to a profile that may be defined by a user at his/her discretion, and may designate a related log for a certain tendency. An unsupervised learning method may be applied to determine the user's tendency based on the foregoing profile and log information, resulting in the user's grouped tendency distribution. If the unsupervised learning method is used, the user's behavior information may be analyzed as the degree of satisfaction based on the supervised learning method and may be used as a key factor that determines the weight of the remaining factors.

The supervised learning and unsupervised learning are classified on the basis of acquisition of meaningful information with respect to certain data.

The supervised learning may be performed by analyzing previous data, discovering and modeling and utilizing a generalized rule for prediction. To discover the generalized rule, a target (or desired output) is selected. The data with the selected target is called supervised data. That is, generally, in supervised learning, input data may be analyzed based on the generalized rule for prediction which may have been obtained through training data, for example.

The unsupervised learning has an input parameter but does not have a target, and puts a meaning in relevance or similarity (i.e., it may establish a relationship or correlation) between input parameters. That is, generally, in unsupervised learning, input data may be clustered or classified based on statistical properties and/or common characteristics of the input data.

The degree of a user's satisfaction may be analyzed as a polarity based on the viewed broadcasting, the genre of used content and usage time and user's behavior information, for example. By way of example, the polarity may be divided into three polarities (satisfied, moderate and dissatisfied), and five polarities (very satisfied, satisfied, moderate, dissatisfied and very dissatisfied), depending on the variety and quantity of log information. The analysis of log information may employ the supervised learning method and may require a reference point. The initial reference point may be defined by a quantitative method, and as log information is collected, adjusted by reinforced learning.

After the analysis of the media recommendation request information is completed, the server 200 may transmit the analyzed media recommendation information to the display apparatus of a user (S305).

The controller 150 displays the media recommendation information received through the communication portion 110, on the display 120. The displayed item includes media information that may be classified, for example, into music and/or video, taking into account various factors, for example, the user's tendency, popularity, territory, time and/or season (S306).

The display apparatus and the method for providing customer-built information using the same according to the example embodiments disclosed herein may have the following effects:

First, the system according to an embodiment is a recommendation system based on the conversational service log and performs an improved recommendation function compared to an existing recommendation system based on frequency.

Second, the system according to an embodiment uses the user's tendency profile which may be defined by a user and may provide an optional recommendation service.

Third, the customer-built information is provided as underlying data for the development of a customized service and may facilitate the development of one or more additional services.

The apparatuses and methods according to the above-described example embodiments may use one or more processors. For example, a processing device may be implemented using one or more general-purpose or special purpose computers, such as, for example, a processor, a controller and an arithmetic logic unit, a central processing unit (CPU), a digital signal processor (DSP), a microcomputer, a field programmable array, a programmable logic unit, an application-specific integrated circuit (ASIC), a microprocessor or any other device capable of responding to and executing instructions in a defined manner.

The terms "module", and "unit," as used herein, may refer to, but are not limited to, a software or hardware component or device, such as a Field Programmable Gate Array (FPGA) or Application Specific Integrated Circuit (ASIC), which performs certain tasks. A module or unit may be configured to reside on an addressable storage medium and configured to execute on one or more processors. Thus, a module or unit may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules/units may be combined into fewer components and modules/units or further separated into additional components and modules.

Each block of the flowchart illustrations may represent a unit, module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

The apparatuses and methods according to the above-described embodiments may be recorded in non-transitory computer-readable media including program instructions to implement various operations embodied by a computer. The media may also include, alone or in combination with the program instructions, data files, data structures, and the like. Examples of non-transitory computer-readable media include magnetic media such as hard disks, floppy disks, and magnetic tape; optical media such as CD ROM disks and DVDs; magneto-optical media such as optical discs; and hardware devices that are specially configured to store and perform program instructions, such as read-only memory (ROM), random access memory (RAM), flash memory, USB memory, and the like. Examples of program instructions include both machine code, such as produced by a compiler, and files containing higher level code that may be executed by the computer using an interpreter. The program instructions may be executed by one or more processors. The described hardware devices may be configured to act as one or more software modules in order to perform the operations of the above-described embodiments, or vice versa. In addition, a non-transitory computer-readable storage medium may be distributed among computer systems connected through a network and computer-readable codes or program instructions may be stored and executed in a decentralized manner. In addition, the computer-readable storage media may also be embodied in at least one application specific integrated circuit (ASIC) or Field Programmable Gate Array (FPGA).

Although a few example exemplary embodiments have been shown and described, it will be appreciated by those skilled in the art that changes may be made to these exemplary embodiments without departing from the invention, the scope of which is defined in the appended claims.

## Claims

1. A display apparatus comprising:
a communication portion to communicate with at least one external device;
a user interface (UI) to receive a request signal from a user;
a display;
a collector to collect log information and a tendency profile based on behavior information of the user, content playing environment information, broadcasting information, and content information when a content received through the communication portion is displayed on the display; and
a controller to output control signals to perform an operation for transmitting the data collected through the collector to at least one external device through the communication portion, to perform an operation of receiving a media recommendation request signal through the UI and transmitting the received media recommendation request signal to the at least one external device through the communication portion, to perform an operation of receiving media recommendation information from the at least one external device according to the data analysis result, and to perform an operation of displaying the received media recommendation information through the display.

2. The display apparatus according to claim 1, wherein the tendency profile comprises a default tendency profile that is provided as a default, and a user tendency profile that is defined by a user.

3. The display apparatus according to claim 2, wherein the default tendency profile comprises at least one of a user's tendency model profile, sociality profile, and consumption profile.

4. The display apparatus according to any one of claims 1 to 3, wherein the media recommendation information comprises a multimedia content list, and an order of the recommended multimedia contents is provided based on at least one of a user's tendency, popularity, territory, time and season.

5. The display apparatus according to any one of claims 1 to 4, wherein the collector includes a sensor to extract the behavior information of the user, wherein the behavior information includes at least one of a location of the user, the number of users, and physical attributes of the user.

6. The display apparatus according to any one of claims 1 to 5, wherein the content playing environment information includes at least one of noise information, intensity of illumination, territory, and time.

7. The display apparatus according to any one of claims 1 to 6, wherein the broadcasting information includes at least one of genre, length, broadcast hour, and airwave or cable information.

8. The display apparatus according to any one of claims 1 to 7, wherein the content information includes at least one of genre, length, price, release date, and execution time.

9. A method of providing customer-built information using a display apparatus, the method comprising:
collecting data regarding a tendency of a user;
transmitting the data to an external device;
receiving a media recommendation request signal from a user;
transmitting the media recommendation request signal to the external device;
receiving media recommendation information based on the transmitted data, from the external device; and
displaying the received media recommendation information.

10. The method according to claim 9, wherein the collecting the data comprises:
displaying a content on the display; and
while the content is displayed on the display, extracting behavior information of the user, content playing environment information, broadcasting information, and content information, to collect log information of the user and a tendency profile.

11. The method according to claim 10, wherein the tendency profile comprises a default tendency profile that is provided as a default, and a user tendency profile that is defined by a user.

12. The method according to claim 11, wherein the default tendency profile comprises at least one of a user's tendency model profile, sociality profile and consumption profile.

13. The method according to any one of claims 9 to 12, wherein the recommendation information comprises a multimedia content list and an order of the recommended multimedia contents being provided based on at least one of a user's tendency, popularity, territory, time and season.

14. A method of providing customer-built information using a server, the method comprising:
receiving, from a display apparatus, log information and tendency profile data of a user;
receiving, from the display apparatus, a content recommendation request;
generating a content recommendation based on the log information and tendency profile data of the user and log information and tendency profiles of a plurality of users stored in a database; and
transmitting the content recommendation to the display apparatus.

15. The method according to claim 14, the method further comprising storing the log information and tendency profile data of the user in the database, and
wherein the generating the content recommendation further comprises:
analyzing the tendency of the user based on the log information and a tendency model profile; and
grouping users and content usage based on the analyzed tendency.
